Europäisches Patentamt

European Patent Office

Office européen des brevets

(19)

(11) Publication number: 0 509 160 A1

# EUROPEAN PATENT APPLICATION

(12)

(21) Application number: 91303328.8

(22) Date of filing: 16.04.91

(51) Int. Cl.⁵: G06F 3/033

(43) Date of publication of application:
21.10.92 Bulletin 92/43

(84) Designated Contracting States:
DE FR GB

(71) Applicant: **International Business Machines Corporation**
**Old Orchard Road**
**Armonk, N.Y. 10504(US)**

(72) Inventor: **Murphy, Alan Stanley**
**8 Malibres Road, Hiltingbury Road,**
**Chandlers Ford**
**Eastleigh, Hampshire SO5 1DT(GB)**
Inventor: **Wiles, John Stewart**
**126 St Cross Road**
**Winchester, Hampshire SO2 9RJ(GB)**
Inventor: **Tustin, Patricia**
**18 Wild Rose Crescent, Locks Heath**
**Southampton, Hampshire SO3 6TJ(GB)**

(74) Representative: **Bailey, Geoffrey Alan et al**
**IBM United Kingdom Limited Intellectual**
**Property Department Hursley Park**
**Winchester Hampshire SO21 2JN(GB)**

(54) Data processing system with display windows.

(57) In a data processing system in which data objects displayed in a window may be preselected for subsequent operation thereon, the operator may be unaware of preselected objects which lie outside the currently displayed window. The invention provides an indication to the operator of the presence of such hidden preselected data objects.

FIG. 6

EP 0 509 160 A1

The present invention relates generally to data processing systems, and more particularly to such systems in which information can be displayed in one or more display windows.

In prior art data processing systems, such as the IBM Personal System/2 computer running the OS/2 operating system (IBM, Personal System/2 and OS/2 are trademarks of the International Business Machines Corporation), it is known for information to be displayed in a display window. The displayed information may comprise, for example, a list of alphanumerical names or graphical icons representing data objects.

If the list of data objects is too large to be displayed in a particular window, a subset of the list is displayed. In this case a schematic representation of the entire list, known as a scroll bar, is often displayed next to the window. The scroll bar includes an elevator box which is a further schematic representation showing the relative size, and position in the list, of the displayed portion. The user may move, or scroll, the window through the list to display a different subset of the data objects.

If a user wishes to perform a single data processing operation on a number of individual objects in the list, then typically he may preselect these objects and then initiate the operation on the preselected objects.

Another embodiment of the concept of a scroll bar is demonstrated in the Cambridge Computer Z88. In this machine a four-line liquid crystal display acts as a viewport on to a larger page of text. Approximately one tenth of the display, at the right hand side, shows a reduced schematic of the larger page, with a single picture element (pixel) corresponding to a character position on the page. If the pixel is "on" (dark), this shows that a character is occupying the corresponding position on the page. An indicator is provided to show the position on the page of the currently displayed portion of the text.

It is a constant aim in data processing to improve the ease of use of the interfaces between the data processing system and the user.

The present invention provides a data processing system comprising: means for choosing a subset of data objects from a set comprising an array of data objects; means responsive to the choosing means for displaying the subset of data objects in a display window; and means for preselecting one or more of the data objects from the set of data objects, for subsequent operation thereon; characterised by indicating means, responsive to the preselecting means for displaying a schematic representation of the position in the array of any preselected data objects which are not currently displayed in the display window.

The invention both recognises and solves the problem that an operator may be unaware that one or more preselected data objects lie outside the portion of the list currently displayed in the display window, and may initiate a data processing operation which is not appropriate to the preselected objects. This problem may arise when, for example, the operator preselects a number of data objects and scrolls the window through the list so that the preselected objects are hidden from view. If the operator is then distracted, he may forget about the preselected objects and initiate an inappropriate data processing operation.

In displaying the schematic representation of the position of any preselected objects, the indicating means could, for example, simply indicate the direction, in the array of data objects and relative to the currently displayed subset, of the preselected objects. As an alternative, a scaled representation of the position of each individual preselected object could be displayed.

In a preferred embodiment the choosing means includes at least one scroll bar with corresponding elevator box, arranged to provide a schematic representation of the currently displayed proportion of at least one linear dimension of said array of data objects. In such a system one or more indicators displayed on the scroll bar and/or elevator box could be used to indicate the presence, position or direction of hidden preselected data objects.

Although the selecting means may be automated, it is preferred that a data processing system according to the invention includes preselecting means responsive to the operator.

A data processing system according to the invention may additionally comprise means for an operator to initiate the subsequent operation on the preselected data objects. It is preferred that the system also includes means for determining whether the number and type of the preselected data objects is appropriate for the initiated subsequent operation and means responsive to the determining means, for preventing execution of said subsequent operation if the number or type of the preselected data objects is not appropriate for that operation. This provides a further check to prevent the operator from initiating an operation which is unsuitable for the preselected data objects.

In order that the invention may be fully understood, preferred embodiments thereof will now be described, by way of example only, with reference to the accompanying drawings in which:

Figure 1 shows a display window with associated scroll bar;

Figure 2 is an expanded view of the scroll bar shown in figure 1;

Figures 3, 4, 5 and 6 show expanded views of the scroll bar shown in figure 1, modified to indicate the presence of preselected data objects outside the currently displayed window;

Figures 7 and 8 show two possible systems for indicating the presence of hidden preselected objects in a two-dimensional array of data objects;

Figure 9 shows systems for indicating the presence of hidden preselected objects in a multi-column list of data objects; and

Figure 10 shows a data processing system in which the present invention may be embodied.

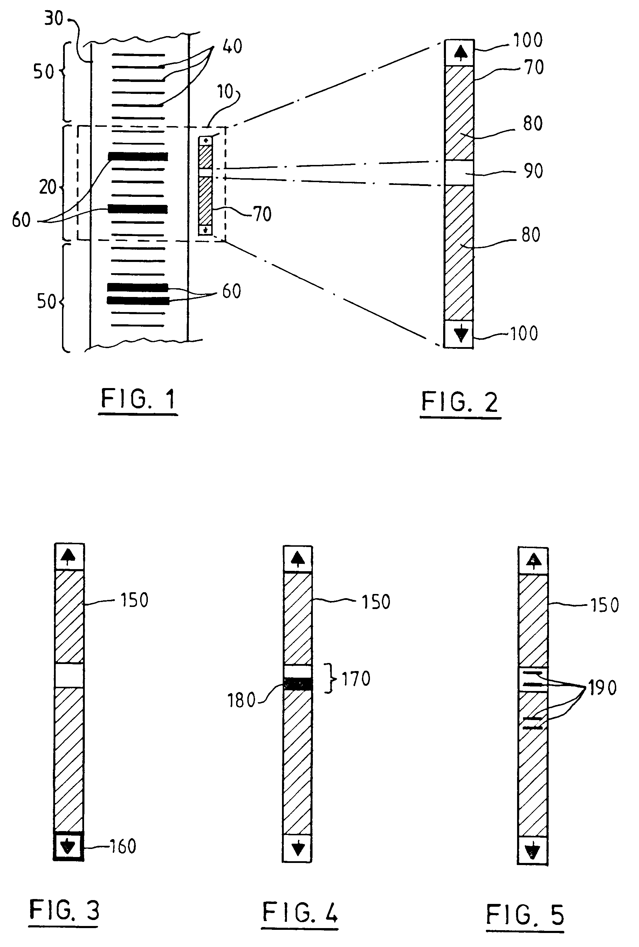

Refer now to figure 1 which shows a display window 10 of the type commonly used in data processing systems. A list 30 of data objects 40 is shown. The data objects themselves may be for example pictorial icons, program titles, directory or file names, or individual items such as diary entries or telephone numbers. Because the list contains too many data objects to be displayed at one time in window 10, a subset 20 of the list 30 is displayed. The remainder 50 of the data objects is hidden from the user.

It is common for the user to be able to preselect one or more data objects displayed in a list, before initiating a common operation on the preselected objects. For example, the User may preselect a number of file names corresponding to data files stored on disk, before initiating the common operation "delete" to erase all of the preselected files from the disk. The objects may be preselected by typed command or by positioning a cursor or mouse-controlled pointer over the object and pressing a predefined key or mouse button. In the figure, preselected objects 60 are shown in bold print; in practice they would be displayed to the user in highlight or using different colours.

Also shown in figure 1, and shown enlarged in figure 2, is a scroll bar 70. The scroll bar is a schematic representation of the list 30 of data objects. The shaded portion 80 of the scroll bar represents the full length of the list, and the portion 90, known as the elevator box, represents the subset 20 of the list which is currently displayed in window 10. The position and relative size of the elevator box 90 in the scroll bar schematically represent the position and relative size in the list of the currently displayed portion 20.

A common method for displaying a different subset 20 of the list 30 of data objects, or 'scrolling' through the list, is to position the cursor or pointer over the elevator box, hold down a predefined key or button, and move the pointer to a new position within the scroll bar. The elevator box is 'dragged' to the new position by the pointer. When the predefined key is released, a new subset of the list of objects, corresponding to the new position of the elevator box, is displayed. For example, if the elevator box were dragged to the bottom of the shaded portion 80 of the scroll bar, a subset comprising items at the bottom of list 30 would be displayed in window 10.

Another common way of scrolling through the list is to position the cursor or pointer over one of the scrolling arrows 100. A single operation of a predefined key or mouse button will then scroll the displayed portion through the list by a predetermined amount in the direction of the arrow.

It will be seen in figure 1 that some of the preselected data objects 60 lie outside the currently displayed portion 20 of the list and are therefore hidden from the user. In the particular example in figure 1 the hidden preselected objects are lower in the list than the currently displayed portion. When the user initiates the operation to be carried out on the preselected objects he may have forgotten which objects have been preselected. Three possible solutions to this problem are shown in figures 3,4 and 5.

Figure 3 shows a modified scroll bar 150 which is similar to scroll bar 70 except that the downward scrolling arrow 160 is shown in bold print. This arrow would be highlighted on the screen in the same way as a preselected object, and indicates to the user that one or more preselected objects are hidden from view and lie further down the list than the currently displayed portion 20. In other words, the hidden objects may be found in the direction of arrow 160 with respect to the currently displayed portion. Similarly, the lower part 180 of the elevator box 170 in figure 4 is highlighted to indicate the presence of hidden objects further down the list.

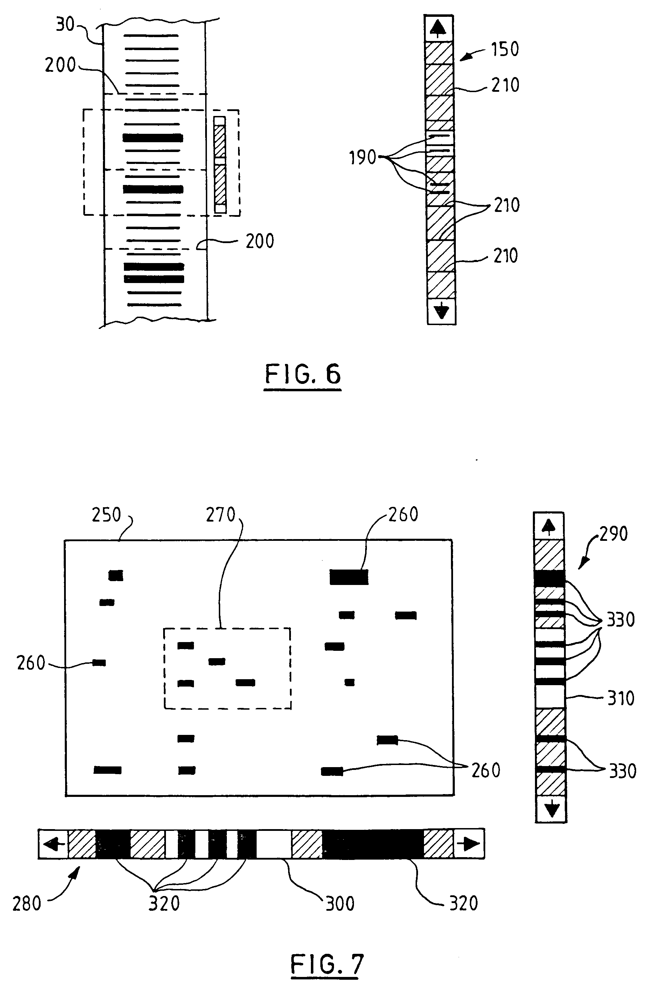

The techniques used in figures 3 and 4 merely indicate the presence and direction of the hidden preselected objects, with no indication of their number or position in the list. A different approach is shown in figure 5, in which highlighted lines 190 in the scroll bar each provide a schematic indication of the position of a corresponding one of the preselected objects in the list, including those currently displayed. This system is further refined in figure 6, in which the list 30 is divided into pages separated by page boundaries 200. Corresponding schematic page boundaries 210 are then provided on the scroll bar, in addition to highlighted lines 190 as described above.

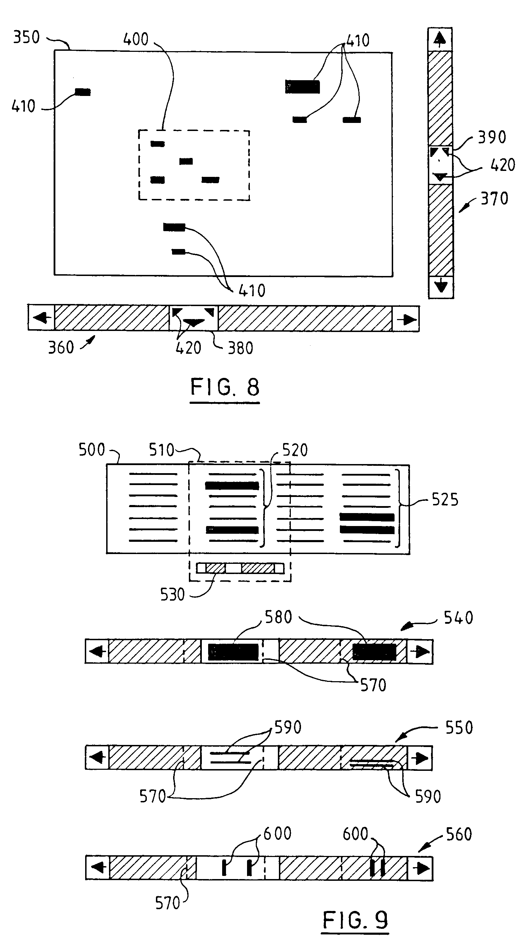

The techniques described with reference to figures 3 to 6 may be applied to arrays, rather than one-dimensional lists, of objects. For example, figure 7 shows a plurality of data objects organised as a two-dimensional array 250. Several objects 260 have been preselected and are shown in bold print on the diagram; again, in practice, these objects would typically be displayed in highlight. For clarity, the non-highlighted objects interspersed between objects 260 have not been shown. A subset of the array 250 of data objects is displayed to the user in display window 270. The objects outside window 270 are hidden from the user.

Two scroll bars 280 and 290 with corresponding elevator boxes 300 and 310 are used to show the horizontal and vertical positions respectively of the window 270 in the array 250 of data objects. Schematic markers 320 and 330 are included in the scroll bars to indicate the presence of hidden preselected objects. Markers 320 are displayed in the horizontal scroll bar 280 to indicate the presence of one or more preselected objects at the horizontal position in the array corresponding to the position of the marker in the scroll bar. Similarly, markers 330 in the vertical scroll bar 290 indicate the presence of preselected objects at that vertical position. Although this system does not uniquely define the position of each preselected object it does give a useful indication of the presence of hidden preselected objects outside the currently displayed window 270.

Figure 8 shows a two-dimensional array 350 of data objects, similar to the array 250 in figure 7. Again, for clarity, only the preselected (highlighted) objects are shown; however, the highlighted and non-highlighted objects would be displayed to the user in practice. Two scroll bars 360 and 370, with corresponding elevator boxes 380 and 390, are again used to indicate the horizontal and vertical position of the display window 400 in the array 350. In this embodiment, the presence of hidden preselected objects 410 is indicated to the user by modifications to the elevator boxes 380 and 390. Schematic arrows 420 are included in each of the elevator boxes to show the direction in the array 350, relative to the currently displayed window, of the hidden objects. In the example shown, the presence of one or more hidden preselected objects above-right, above-left, and directly below the currently displayed window 400 is indicated. If the user scrolls the window 400 to a new position in the array, the arrows 420 would alter as necessary to show the revised directions of hidden preselected objects.

Finally, figure 9 shows how the invention could be used in the case of a multi-column list 500 of data objects. In the example shown, the display window 510 is able to display an entire column 520 of the list 500. Therefore, only a horizontal scroll bar 530 is needed to show the position of the window 510 in the list. As shown, the second 520 and fourth 525 columns, counting from the left of the figure, include preselected (highlighted) objects.

Three possible modified scroll bars 540, 550 arid 560 are shown, all of which are capable of alerting the User to the presence of hidden preselected objects. In each case, the boundaries between columns in the list are shown schematically using dashed lines 570.

In scroll bar 540 large blocks 580 are displayed between the appropriate column boundaries 570 to show that a particular column includes one or more preselected objects. In scroll bar 550 the vertical position within the column of the preselected objects is shown schematically by means of lines 590, each representing a particular preselected object. Schematic lines 600 in scroll bar 560 are used similarly, except that their horizontal position in the portion of the scroll bar corresponding to a particular column is used to indicate the vertical position of the preselected objects.

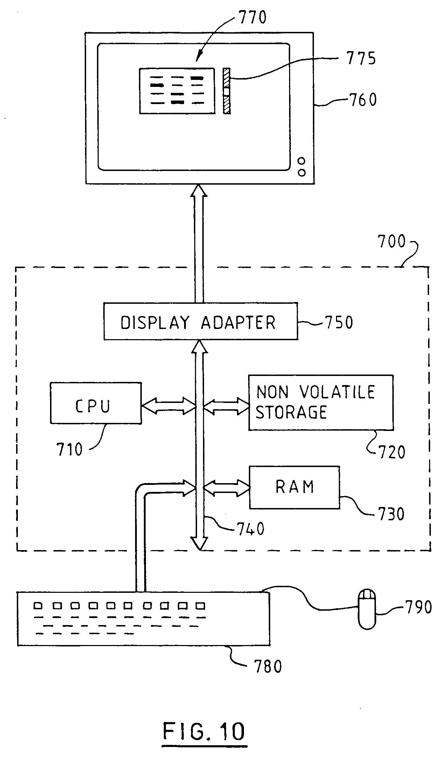

Figure 10 shows one possible configuration of a data processing system in which the present invention may be embodied. The main unit 700 includes a central processing unit (CPU) 710, non-volatile storage 720 such as read-only-memory (ROM), magnetic storage or optical storage, and random access memory (RAM) 730, all connected to bus 740. Also connected to bus 740 is a display adapter 750 which acts as an interface between the main processing unit 700 and display 760. The display 760, shown displaying window 770 to the user, may comprise a cathode ray tube, a flat panel type display such as a liquid crystal display, or any other suitable display means. The data processing system in figure 10 also includes a keyboard 780 and mouse 790 for the user to input information.

In operation, when a subset of a list or array of data objects is displayed in the display window, the CPU 710 under control of a program stored in storage 720 or RAM 730 determines the size and position of the elevator box to be displayed in scroll bar 775. As data objects are preselected by the user, a record of the preselections is kept in RAM 730. With reference to this record the CPU 710 then determines the nature and display position of the indications described above with reference to Figures 3 to 9. Instructions to display the window scroll bar and indications are handled by the display adapter 750.

The embodiments of the invention described above involve modifications to the scroll bar associated with a display window. However, it will be clear that the invention is applicable to any data processing system in which a subset of a larger list or array of data objects is displayed in a display window. The invention could be implemented as a general purpose data processing system operating under the control of specialist software, as a dedicated data processing system, or even by the use of hardwired logic.

**Claims**

1. A data processing system comprising:

means for choosing a subset of data objects from a set comprising an array of data objects;

means responsive to the choosing means for displaying the subset of data objects in a display window: and

means for preselecting one or more of the data objects from the set of data objects, for subsequent operation thereon;

characterised by indicating means, responsive to the preselecting means, for displaying a schematic representation of the position in the array of any preselected data objects which are not currently displayed in the display window.

2. A data processing system as claimed in claim 1, in which the choosing means includes at least one scroll bar with corresponding elevator box, arranged to provide a schematic representation of the currently displayed proportion of at least one linear dimension of said array of data objects.

3. A data processing system as claimed in claim 2, in which the indicating means comprises means for displaying one or more indicators on the scroll bar and/or elevator box.

4. A data processing system as claimed in any preceding claim, in which the means for preselecting is responsive to input from the operator.

5. A data processing system as claimed in any preceding claim, further comprising:

means for an operator to initiate said subsequent operation on the preselected data objects;

means for determining whether the number and type of the preselected data objects is appropriate for the initiated subsequent operation; and

means responsive to the determining means, for preventing execution of said subsequent operation if the number or type of the preselected data objects is not appropriate for that operation.

FIG. 1

FIG. 2

FIG. 3

FIG. 4

FIG. 5

FIG. 6

FIG. 7

FIG. 8

FIG. 9

<u>FIG. 10</u>

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| A | USENIX ASSOC. Conference Proceedings, Berkeley, CA, USA; USENIX Winter Conference, 9-12 Feb. 1988, Dallas, TX, USA pages 9-21; A.J. PALAY et al. : 'The Andrew Toolkit - An Overview' * page 16, left column, line 36 - line 40; figures 1-5 * | 1-4 | G06F3/033 |

-----

|   |   |   | TECHNICAL FIELDS SEARCHED (Int. Cl.5 ) |
|---|---|---|---|
|   |   |   | G06F |

The present search report has been drawn up for all claims

| Place of search | Date of completion of the search | Examiner |
|---|---|---|
| THE HAGUE | 11 DECEMBER 1991 | Piero Bravo |

EPO FORM 1503 03.82 (P0401)